# EUROPEAN PATENT APPLICATION

(11) **EP 2 058 607 A2**
(43) Date of publication of application: **13.05.2009**
(21) Application number: 08167315.4
(22) Date of filing: 22.10.2008
(51) Int. Cl.: F25B 30/06, F25B 29/00

(54) **Geothermal Heat Pump**

(30) Priority: 06.11.2007 IT FI20070250
(71) Applicant: Klim Acqua e Aria di Silvano Galantini & C. SNC, 50013 Campi Bisenzio (FI) (IT); Nivab di Lorenzetti Fabio & C. SNC, 53034 Colle di val d'Elsa (SI) (IT)
(72) Inventor: Galantini, Silvano, 50100, Firenze (IT); Lorenzetti, Fabio, deceased (IT)
(74) Representative: Tirloni, Bartolomeo

(57) **Abstract**

Geothermal heat pump including a gas refrigerating circuit (CF) associated with a hydraulic circuit (CI) connected to the water sides of the heat exchangers (SC, SE) of the refrigerating circuit (CF) and connected to the hydraulic plant of the uses (U) and to geothermal exchange means (SG). The gas refrigerating circuit is unidirectional and includes, in a sequence: a compressor (11), a condenser (SC) suitable for heating the water in the hydraulic circuit (CI), a lamination element (12) and an evaporator (SE) suitable for cooling the water in said hydraulic circuit (CI). The hydraulic circuit (CI) includes: first ducts (13) connected to the inlet and the outlet of the water side of the condenser (SC); second ducts (14) connected to the inlet and the outlet of the water side of the evaporator (SE); interconnection valve means (15) of said first and second ducts (13, 14) with third and fourth connection ducts (16, 17) with the inlets and the outlets of the hydraulic uses (U) and with the geothermal exchange means (SG); thermostats (Tc, Te) associated with said first and second ducts (13, 14) suitable for measuring the temperature of the water entering the condenser (SC) and exiting from the evaporator (SE); operation means (19) of the valve means (15) in cooperation with the thermostats (Tc, Te). Operation means (19) are suitable for connecting the water side of the condenser (SC) with the hydraulic uses (UC) if they have to be warmed and/or with said geothermal exchange means (SG) for the removal of the excessive heat, and connecting the water side of the evaporator (SE) with the hydraulic uses (UF) if the have to be cooled and/or with said geothermal exchange means (SG) for removing the excess of cold. Operation means (19) cooperate with the valve means (15) for operating the hot/cold water flows by simultaneously and automatically sending them to the hot/cold uses (U) requiring the same, by conveying the residual hot/cold water flow to the removal at the geothermal exchange means (SG) for allowing the heat balance of the exchanged heat.

## Description

The present invention relates to the field of thermotechnical plants, and in particular its object is a geothermal heat pump.

As it is known, geothermal heat pumps consist of a cycle inversion refrigerating plant, generally of a gas type, interfaced with the uses and the geothermal probes inserted in the ground at an appropriate depth, which in practice act as a "thermal flywheel" for providing the excessive heat (removing the excessive "heat") or gaining heat (removing the excessive "cold"). The ground, in fact, has a very high heat capacity and, in every period of the year, maintains an almost constant temperature.

The refrigerating plant of the most evolved heat pumps typically foresees a compressor, a first heat exchanger, always at a high temperature (desuperheater dimensioned for exploiting the thermal efficiency dissipated by the compressor), which generally exchanges heat with the sanitary hot water plant, a second heat exchanger which exchanges heat with the geothermal source, a third heat exchanger which exchanges heat with the environmental heating/cooling plant, a lamination valve, and an inversion cycle four-way valve, which inverts the second and the third exchangers.

In the winter operation, the third exchanger works as a condenser, by providing heat to the water of the heating plant (it produces "heat"), while the second exchanger works as an evaporator and obtain heat from the water circulating through the geothermal probes (it transfer "cold" to the geothermal source, namely the ground). The desuperheater (when present) provides heat to the sanitary water.

In the summer operation, thanks to a proper action of the gas cycle inversion valve, the third exchanger works as an evaporator, by gaining heat from the water of the cooling plant (it produces "cold"), while the second exchanger works as a condenser by providing heat to the water circulating within the geothermal probes (it transfer "heat" to the ground). The desuperheater (when present) provides heat to the sanitary water.

In structural terms, the heat pump thus formed typically foresees an outer casing in which the cycle inversion gas refrigerating plant is contained. Also the heat exchangers are contained within the casing. The inlets and the delivery of the "water" sides of the exchangers are available on the exterior of the casing, for the connection to the sanitary water plant, the heating/cooling plant and the geothermal probes.

In practice, this kind of geothermal heat pump presents all a series of not negligible problems.

A first problem is that, for instance, during intermediate seasons in which neither the heating plant nor the cooling plant are operative, the production of sanitary hot water is often devolved to a Joule effect heating, due to an electric resistance existing in the boiler. Therefore, for a large part of the year, the sanitary water is produced through electric heating; as it is known, the electric energy is a "noble" energy source which, from the economical point of view, is not very convenient for being transformed in heat energy. This also contrasts with the new legislative tendencies which try to impose the production of sanitary hot water with an important part of renewable-type energy.

The same problem occurs when the heating/conditioning plant, independently of the season, has reached the programmed temperature value, whereby the plant is inoperative (compressor switched off) and, at the same time, there is a request of sanitary hot water. In fact, once the plant has reached the programmed temperature, the compressor is switched off and therefore the production of Hot Water for hygienic-Sanitary uses, HWS, (at high temperature) is stopped. This involves a frequent switching off of the compressor and for long periods, by limiting the possibility of producing HWS both in quantitative and maximum temperature terms (for this reason, as above pointed out, resistances are generally used).

Another important problem is that, currently, geothermal heat pumps are capable of producing "cold" in the summer season with a removal of the excessive heat (less the part for the sanitary water) at the geothermal source, and are capable of producing "heat" in winter, with a transfer of all the "cold" at the geothermal source, whereas they are not able to work in other periods of the year if there is not a particular request of heating or cooling by the uses.

In practice, such heat pumps are not able to manage, independently of the season, the different requests of heating or cooling in an independent way, such as the request of cold for the conditioning, the request of heat for the heating, the request of heat for the sanitary water, the request of heating for a swimming-pool or other, etc.

Reference is made, for example, to the case of a summer operation, in which there is the production of "cold" for the uses and the removal of the "heat" towards the geothermal probes. If the heat pumps of a known type are not asked to produce "heat", for example for heating a swimming-pool, the heat pump of a known type (according to the determined priorities) will provide to the cycle inversion for the production of hot water. This behavior needs the switching off of the compressor, the cycle inversion and the restarting of the heat pump, with quite long and certainly not immediate application times.

To date, there are geothermal heat pumps capable of making this inversion, but they are structurally complicated. Moreover, the inversion operation is not immediate but needs time. At present, there are no geothermal heat pumps capable of removing heat or cold depending on the immediate needs of the uses.

Another problem of the geothermal heat pumps of a known type is that the parts which can more easily deteriorate are linked to the cycle inversion, and in particular to the inversion valve. Furthermore, from a practical point of view, the repair operations concerning a plant with a thermal vector given by a volatile fluid, are complex and need particular equipments and skilled personnel.

Another important object of the present invention is to carry out a geothermal heat pump which has a high reliability of the refrigerating circuit, such that the likelihood of a failure of this part of the heat pump is reduced. In this way, more probably, possible failures will be linked to the hydraulic circuit (compared to a heat pump equipped with cycle inversion on the gas side) and easier to repair for any plumbers without remarkable skills in refrigerating plants.

An object of the present invention is to solve the problems pointed out in the geothermal heat pumps of a known type, in particular by providing a geothermal heat pump which allows to manage in a flexible way, independently of the season, the different requests of heating or cooling.

A further important object of the present invention is to carry out a geothermal heat pump which allows to heat the sanitary water without the use of electric resistances.

Another important object of the present invention is to carry out a geothermal heat pump which can be repaired in a simple way in case of failures.

These and other aims, which will become more evident in the following, are attained by a geothermal heat pump which includes a gas refrigerating circuit associated with a hydraulic circuit connected to the water sides of the heat exchangers of the refrigerating circuit and connected to the hydraulic plant of the uses and the geothermal exchange means. The invention is characterized in that the gas refrigerating circuit is unidirectional and includes, in sequence: a compressor, a condenser suitable for heating the water in said hydraulic circuit, a lamination element and an evaporator suitable for cooling down the water in the hydraulic circuit. The hydraulic circuit includes: first ducts connected to the inlet and the outlet of the water side of the condenser; second ducts connected to the inlet and the outlet of the water side of the evaporator; interconnection valve means of the first and second ducts with third and fourth connection ducts with the inlets and the deliveries of the hydraulic uses and with the geothermal exchange means; thermostats associated with said first and second ducts, suitable for measuring the temperature of the water entering the condenser and exiting from the evaporator; operation means of the valve means in cooperation with the thermostats.

Operation means are suitable for connecting the water side of the condenser with the hydraulic uses, if they have to be heated, and/or with the geothermal exchange means for the removal of the excess of heat, and for connecting the water side of the evaporator with the hydraulic uses if they have to be cooled down and/or with geothermal exchange means for removing the excess of cold.

Operation means cooperate with the valve means in order to operate the hot/cold water flows by simultaneously sending them, in an automatic way, to the hot/cold uses requesting the same, by conveying the residual hot/cold water flow to the removal at the geothermal exchange means, for allowing the heat balance of the exchanged heat.

In practice, in this way, depending on the requirements, namely hot water or cold water, which will serve for heating or cooling environments, sanitary water, swimming-pool water, etc, it is possible to direct, also simultaneously, the required quantity of "heat" or "cold" to the uses, independently of the season, and to remove the excessive heat or cold (that is the heat energy resulting from the heat balance between the different uses) through the geothermal exchange means, namely the removal geothermal probes inserted in the ground.

Further features and advantages of the geothermal heat pump according to the present invention will result more apparent from the following description of an embodiment thereof, made by mere way of not limiting example with reference to the enclosed drawings, in which:
- figure 1 represents a schematic diagram of a heat plant in which the schematic diagram of a geothermal heat pump according to the invention is pointed out;
- figure 2 represents a schematic diagram of the refrigerating circuit that is part of a geothermal heat pump according to the invention;
- figure 3 represents a schematic diagram of an embodiment of a geothermal heat pump according to the invention;
- figures 4, 5 and 6 represent the schematic diagram of figure 3 in which the circulation directions of the hot and cold water of the hydraulic circuit of the heat pump in different way of operations are pointed out;
- figure 7 represents a schematic diagram of a heat pump as in the preceding figures, in which a solar panel branch is applied;
- figures from 8 to 11 represent schematic diagrams showing the circulation directions of the hot and cold water in the heat pump of figure 7;
- figure 12 shows a schematic diagram of the external structure of the heat pump according to the invention.

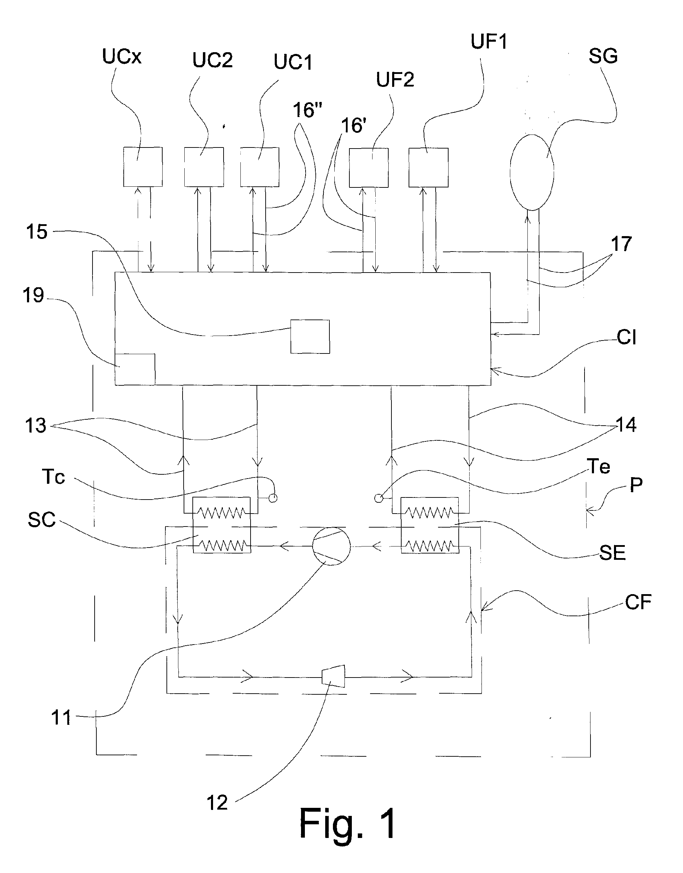

With reference to figure 1, the geothermal pump, generally shown by P, is outlined within the square marked with line-two dots-line. The heat plant in which the heat pump P has to be inserted is generally shown by IT.

Components of the geothermal heat pump consist of a gas refrigerating circuit CF associated with a hydraulic circuit Cl (outlined by a rectangle) connected to the water sides of the heat exchangers SC and SE of the refrigerating circuit and connected to the hydraulic plant of the uses, these latter shown by UF with reference to "cold" uses, namely which require a cooling (for example the conditioning of a room), and with UC with reference to "hot" uses, namely which require a heating (for example the heating of a room, the heating of the sanitary water, the heating of a swimming-pool water, etc.). Multiple hot and cold uses have been shown, each one marked by a number.

The geothermal heat pump is interfaced, as it is obvious, to geothermal exchange means SG such as, for example, receiving probes to be introduced in the ground, of a per se known type.

Differently from the gas refrigerating circuits of the geothermal heat pumps of a known type, the refrigerating circuit CF is not of a cycle inversion type but is "unidirectional" and therefore it consists of the classical components of a traditional refrigerating circuit. These are, in series between them, a compressor 11, a condenser SC, a lamination element 12 and an evaporator SE.

The hydraulic circuit Cl includes: first ducts 13 connected to the inlet and the outlet of the water side of the condenser SC, second ducts 14 connected to the inlet and the outlet of the water side of the evaporator SE, interconnection valve means 15 (generally outlined with a rectangle) of the first and second ducts 13 3 and 14 with third and fourth connection ducts 16'-16" and 17 with the inlets and the feeds of the hydraulic uses UF-UC and with the geothermal exchange means SG.

Furthermore, there are thermostats, shown by Tc and Te, associated with the first and second ducts 13 and 14, suitable for measuring the temperature of the water entering/exiting the condenser SC and entering/exiting from the evaporator SE.

Finally, there are operation means 19 (also outlined by a rectangle) of the valve means 15 in cooperation with the thermostats Tc and Te. Such operation means 19 are suitable for connecting the water side of the condenser SC with the hydraulic uses UC if they have to be warmed and/or with the geothermal exchange means SG for the removal of the excessive heat, and connecting the water side of the evaporator SE with the hydraulic uses UF if they have to be cooled and/or with the geothermal exchange means for removing the excessive "cold".

In practice, depending on the request of heating or cooling to the hydraulic uses, the valve means 15, coordinated by the operation means 19 and the thermostats Tc-Te with which they cooperate, connect the uses UC which have to be heated (if they are present) with the condenser SC, the uses UF which have to be cooled (if they are present) with the evaporator SE, while the residual "heat" or the residual "cold" from the heat balance of the uses UC-UF is sent to the geothermal exchange means SG for the removal.

According to this logic, therefore, the heat pump P is able to operate the hot and cold water flows to the uses U in an extremely flexible way (it is in fact possible to simultaneously operate hot and cold uses) and substantially independently of the season.

Particularly innovative and advantageous execution examples of the geothermal heat pump according to the invention are shown hereinafter.

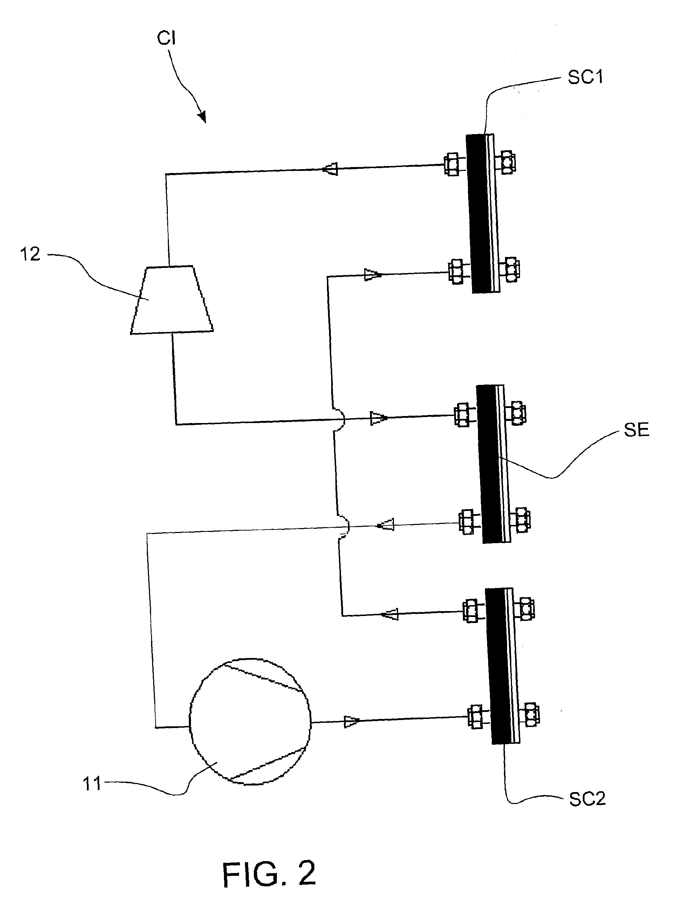

In figure 2 a schematic diagram of the refrigerating circuit CF according to a preferred structure is shown. As visible, the condenser is divided in two separate heat exchanger modules, a first exchanger SC1 which functions as a real condenser, and a desuperheater SC2 which processes the part of overheated gas due to the heat produced by the compressor 11.

Advantageously, such desuperheater SC2 is thermally overdimensioned relative to the sole requirements of processing the heat produced by the compressor; in particular, it is dimensioned in a way substantially equivalent to the condenser SC1, namely the heat exchange capacities of the condenser and the desuperheater are substantially equal. In particular, both the desuperheater SC2 modulus and the condenser SC1 modulus are dimensioned in such a way that each one is able to exchange the generated/requested total heat. This allows to avoid the use of electric resistances for the heating of the sanitary hot water, as it is better explained below.

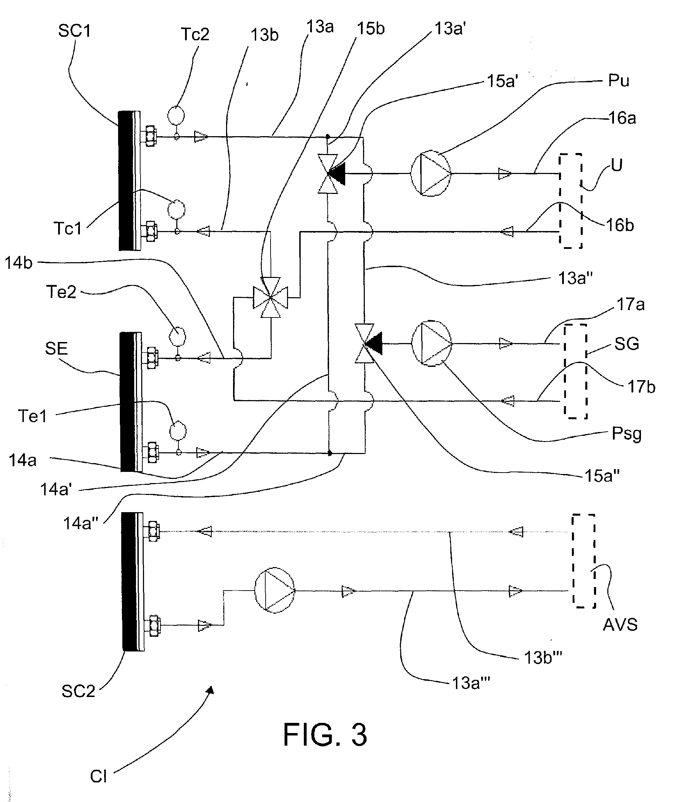

In figure 3 a hydraulic circuit Cl according to a preferred structure is shown, associated with a refrigerating circuit CF as that shown in figure 2. Such hydraulic circuit Cl includes first ducts 13 connected at the inlet and the outlet of the water side of the condenser SC. Through the valve means 15, the outlet part of the water side of the condenser SC, hereinafter shown as the first outlet part 13a, can be connected with the duct which supplies water to the (hot or cold) uses U, marked by 16a, or with the duct which supplies water to the geothermal probes SG, marked by 17a.

In particular, the first outlet part 13a is divided in two outlet branches, respectively defined first outlet branch at the uses side 13a' and first outlet branch at the removal side 13a", respectively ending in a three-way valve defined "three-way valve at the use side" 15a' and in a further three-way valve defined "three-way valve at the removal side" 15a".

From the three-way valve at the use side 15a', the duct which supplies water to the uses 16a is extending. From the three-way valve at the removal side 15a" the duct which supplies water to the geothermal probes 17a is extending.

Analogously, through the valve means 15, the inlet part at the water side of the condenser SC1, hereinafter shown as first inlet part 13b, can be connected with the duct which returns water from the uses 16b, or with the duct which returns water from the geothermal probes 17b.

In particular, the duct which returns water from the uses 16b and the duct which returns water from the geothermal probes 17b meet in a four-way valve 15b, from which the first inlet part 13b at the water side of the condenser SC1 is exiting.

As mentioned, the hydraulic circuit Cl includes second ducts 14 connected at the inlet and the outlet of the water side of the evaporator SE. Through the valve means 15, the outlet part of the water side of the evaporator SE, hereinafter shown as second outlet part 14a, can be connected with the duct which supplies water to the uses 16a, or with the duct which supplies water to the geothermal probes 17a.

In particular, the second outlet part 14a is divided in two outlet branches, respectively defined second outlet branch at the uses side 14a' and second outlet branch at the removal side 14a", respectively ending in the three-way valve at the uses side 15a' and in a the three-way valve at the removal side 15a".

Analogously, through the valve means 15, the inlet part at the water side of the evaporator SE, hereinafter shown as second inlet part 14b, can be connected with the duct 16b which returns water from the uses, or with the duct 17b which returns water from the geothermal probes, as it is connected with the four-way valve 15b.

Needless to say that the same results of a connection between first and second ducts 13 and 14 with the ducts 16 and 17 from and towards the uses U and from and towards the geothermal probes SG can be carried out with combinations of valves different from those now described, for example by replacing the four-way valve 15b with two three-way valves, whereas the two three-way valves 15a can be replaced with a four-way valve.

The water side of the desuperheater SC2 has an outlet duct 13a"' and an inlet duct 13b"' directly connected with the "hot" use corresponding with the production of sanitary hot water. In practice, the desuperheater SC2 is connected with the heat exchanger for the production of sanitary hot water (for example associated with a boiler). At the same outlet and inlet ducts 13a"' and 13b"' also other thermal uses can be connected, such as for example the heating plant of the swimming-pool water.

In this example, the thermostats Tc and Te are pairs of digital thermostats arranged at the inlet and the outlet of the water side of the condenser SC1 and the evaporator SE, respectively. Thermostats Tc1 and

Te2 are double-stage thermostats.

On the heat pump there is a selector which allows to set the "winter operation" or the "summer operation". Moreover, the thermostat Tc1 measures the temperature of the hot water entering the condenser, the thermostat Tc2 measures the temperature of the hot water exiting from the condenser; analogously, the thermostat Te1 measures the temperature of the cold water at the outlet of the water side of the evaporator SE, while the thermostat Te2 measures the temperature of the cold water entering at the water side of the evaporator.

Let assume to have set the following temperatures on the thermostats previously mentioned:
- Tc1 = 40°C, with a thermal hysteresis Dt equal to 5°C
- Te2 = 12°C, with a thermal hysteresis Dt equal to 5°C

During the winter operation, the heat pump operates according to the following logic: when Tc1 (measured) < 40°C, the logic of the heat pump allows the starting of the compressor; there is the condition in which both the first and the second outlets of the double-stage thermostat are operative (ON).

In the condition 40°C ≤ Tc1 (measured) ≤ 45°C, the operation logic acts on the heat pump by switching off the compressor; there is the condition in which the first outlet is operative (ON) and the second is inoperative (OFF).

With Tc1 (measured) > 45°C (in case the start of the compressor comes from another starting request of the compressor), the operation logic acts on the heat pump by conveying the hot fluid to the removal; there is the condition in which both the first and the second outlets of the double-stage thermostat are inoperative (OFF).

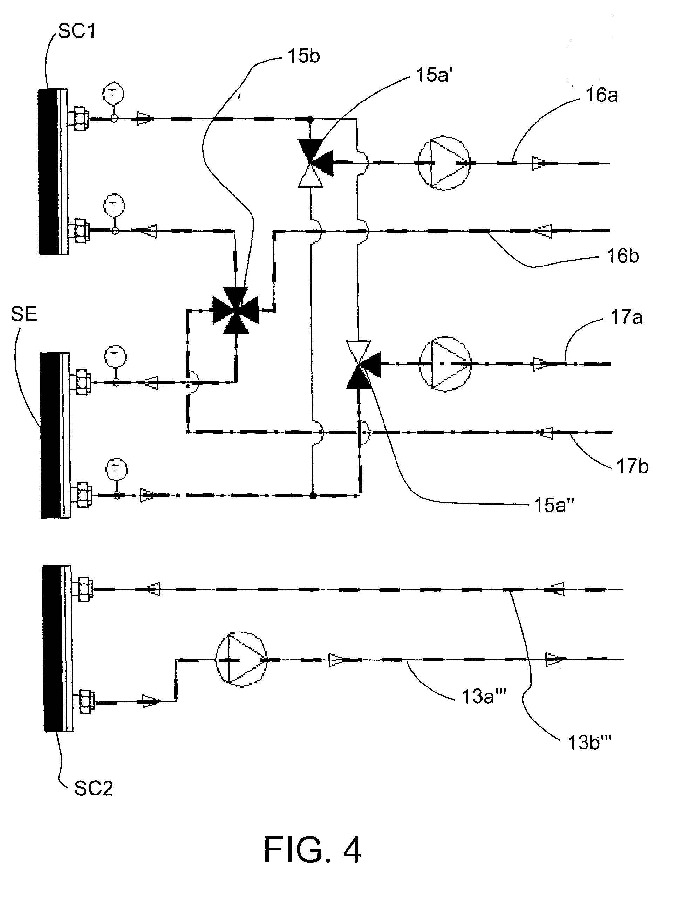

In Figure 4, the case of the room and sanitary hot water heating is exemplarily shown, with the all cold removed by the geothermal probes. It is to be noted how, in this and the following figures, the flows having a hot, cold or intermediate temperature have been shown with differentiated broken lines.

Tc2 is set as a protection of the heat pump; when the outlet temperature of the condenser SC1 exceeds a certain value, a switching-off signal is sent to the compressor 11 (both in "summer" and "winter" operations).

Analogously, during the summer operation, the heat pump will operate according to the following logic: when Te2 (measured) > 12°C, the logic of the heat pump allows the starting of the compressor; there is the condition in which both the first and the second outlets of the double-stage thermostat are operative (ON).

In the condition 7°C ≤ Te2 (measured) ≤ 12°C, the operation logic acts on the heat pump by switching off the compressor; there is the condition in which the first outlet is operative (ON) and the second is inoperative (OFF).

With Te2 (measured) < 7°C (in the event in which the starting of the compressor comes from another starting request of the compressor), the operation logic acts on the heat pump by conveying the cold fluid to the removal; there is the condition in which both the first and the second outlets of the double-stage thermostat are inoperative (OFF).

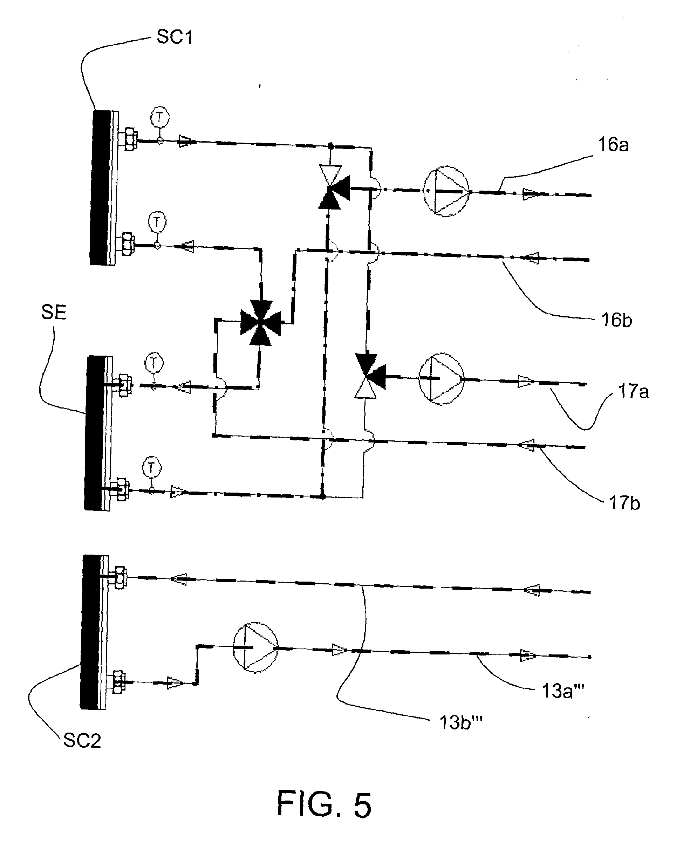

In Figure 5, the case of the room conditioning with the heating of the sanitary hot water is exemplarily shown, with all the heat produced by SC1 being removed at the geothermal probes.

Te2 is set as a protection of the heat pump: when the inlet temperature of the condenser SE is lower than a certain value, a switching-off signal is sent to the compressor 11a (both in "summer" and "winter" operation).

Needless to say that, instead of the double-stage digital thermostats used, single thermostats, also of a mechanical type, can be analogously used. Furthermore, the eight temperatures of the thermostats (three of the two regulating thermostats and two limiting temperatures of the two other thermostats) can be set as a function of the plant requirements and the compressor/gas used.

It is important to underline that the operation logic, if the heat pump is set for the summer operation, disables the possibility of switching on the compressor by the two-stage thermostat on the evaporator (the one measuring Te2) while, if the heat pump is set in winter operation, it disables the possibility of switching on the compressor by the two-stage thermostat on the condenser (the one measuring Tc1).

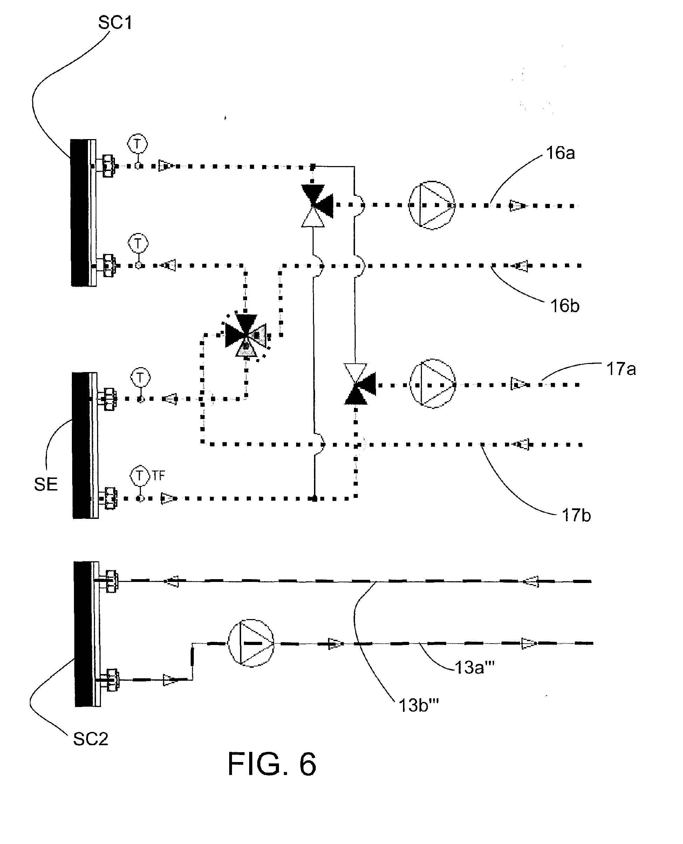

In the remote chance in which either thermostats, both in the summer and the winter operation, require the removal [namely Tc1 (measured) > 45°C and Te2 (measured) < 7°C] the heat pump will rotate the 4-way valve in order to short-circuit the use with the removal (as pointed out in figure 6). Such condition could occur, for example, following to a lasting request of hot water for hygienic-sanitary uses (ACS), without any other requests by the use.

As for the heating of the sanitary hot water, this occurs by using the heat produced in the desuperheater SC2, therefore, if there is a request of heating or cooling by some other use, the activation of the compressor 11 produces heat, supplied to the water circulating through the ducts 13a"' and directed to the heat exchanger (for example, associated with a boiler, not shown in the figures) for the production of sanitary hot water.

If there is an intermediate season, in which neither environmental nor conditioning heating is requested, or if the "set-point" has been reached (whereby there are no requests to the condenser and/or evaporator), and there is a request of hot water (to the desuperheater), the compressor 11 is operated. For the water side of the condenser SC1, water is not circulated, therefore SC1 does not exchange heat; the heat of the refrigerating cycle, in practice, is all supplied by the desuperheater SC2 to the water sent to the exchanger for the production of sanitary hot water.

As mentioned, the desuperheater SC2 is thermally dimensioned as the condenser SC1, that is they have heat exchange capacities substantially equal (each one is able to exchange the whole generated/- requested heat. Therefore, until the temperature difference between the water in the primary circuit (namely the heating water) of the exchanger and the water in the secondary circuit of the exchanger (namely the water to be heated) is high (beginning of the heating step of the water), the thermal performances of the desuperheater SC2 are comparable with those of the condenser SC1, namely they are high (the exchanged heat is the sum of the condensation heat and the Joule effect of the compressor). As the temperature difference between coil and water within the boiler decreases, the thermal performances are lowered (since the temperature difference between primary and secondary fluids decreases, by lowering the exchanger throughput), and a constant minimum, proportional to the thermal power dissipated by the compressor 11 by Joule effect, is reached.

Therefore, during the "intermediate season" or when the "set-point" has been reached, on average, mainly condensation heat and minimally Joule effect heat are used for warming the sanitary water. In this way, the yield of the heat pump is remarkably enhanced.

Needless to say that the request of high temperature hot water by the desuperheater SC2 may occur from any external use connected to the same, depending on the requirements.

If there are two or more high temperature requests, their hierarchy will be controlled by the plant circuit.

Operation means 19 with the valve means 15 can also "short-circuit" the uses U with the geothermal probes SG. See for example figure 6, in which the duct 17b of the water returning from the geothermal probes, in connection with the first inlet part 13b at the water side of the condenser SC1 is shown, whereas the duct 16b of the water returning from the uses is in connection with the second inlet part 14b at the water side of the evaporator SE. Of course, the first outlet part 13a at the water side of the condenser SC1 is connected with the duct which supplies water to the uses 16a, whereas the second outlet part 14a at the water side of the evaporator SE is connected with the duct 17a which supplies water to the geothermal probes.

This short-circuit possibility (independently of the heating operation of the water through the desuperheater SC2) allows, for example, in case of uses consisting of a radiant floor, to send water, in summer, from the geothermal probes, at a temperature slightly lower than the room temperature, by obtaining a slight cooling of the environment. Analogously, in winter, it is possible to provide water to the floors at a temperature not lower than 7°C, thus obtaining the anti-freezing of the premises. All this happens with the compressor 11 inoperative.

As shown in the figures, the geothermal heat pump also includes pumping hydraulic elements, such as hydraulic pumps Pu and Psg respectively arranged on the ducts 16a, 17a sending water to the uses and to the geothermal probes, for allowing the circulation of the water within the hydraulic circuit Cl. Such hydraulic pumps can also not belong to the heat pump but to the uses/geothermal probes plant to which the heat pump is interfaced.

In figures from 7 to 11, there are shown schematic diagrams concerning the interface of the geothermal heat pump with additional sources/uses consisting of solar panels S, to carry out a thermal plant IT.

The operation flexibility of the geothermal heat pump P according to the invention allows, in fact, to synergically associate solar panels, such that the potentials of these latter are completely exploited.

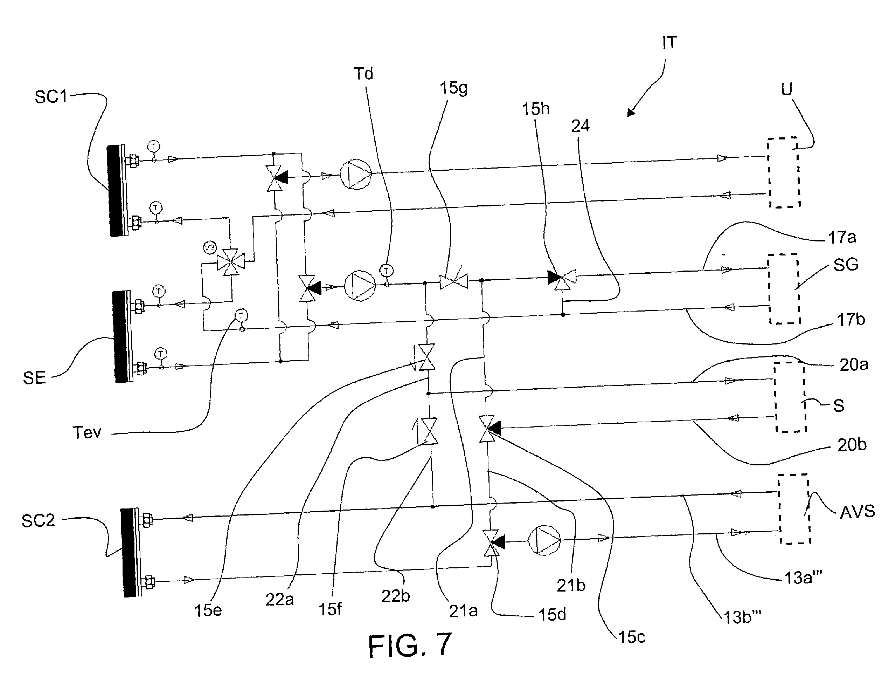

In figure 7, an exemplifying schematic diagram of the solar panels-geothermal heat pump P association is shown. As visible, referring to the schematic diagram of the heat pump above shown, the duct which sends water to the solar panels is shown by 20a, while the duct which returns water from the solar panels is shown by 20b.

Valve means 15 allow to connect, through opportune pipes, the duct 20b which returns water from the solar panels both with the outlet duct 13a"' coming from the desuperheater SC2, and with the duct 17a which sends water to the geothermal probes SG. The same valve means 15 allow to connect the duct 20a which sends water to the solar panels both with the inlet duct 13b"' to the desuperheater SC2, and with the duct 17a which sends water to the geothermal probes SG. Such configuration allows to send hot water from the solar panels to the geothermal probes, or to the sanitary water exchanger (for example associated with the boiler) or to other uses or further to send hot water from the hot sources of the heat pump to the solar panels. All these possibilities are better explained below.

The aim of this solar panels/geothermal heat pump interface is to use the solar panels for heating and therefore providing heat towards the geothermal probes SG in the ground. In winter time, the water within the geothermal probes must obtain heat from the ground and therefore works at temperatures in the order of 0°C. Providing heat to this fluid is very easy; in fact, a solar system is generally capable of exceeding 15/20°C also in the presence of cloudy sky, when the radiation is not direct. In this way, in winter, the temperature of the refrigerating cycle evaporation is increased of even 5°C, with a remarkable improvement of the heat pump performance.

Moreover, when the heat pump does not operate the compressor, the heat plant continues to feed and heat the geothermal probes SG using the ground as an inertial tank and therefore accumulating the solar energy in the ground.

Of course, if the temperature of the solar panels exceeds that of the end uses, for example the accumulation temperature of the sanitary hot water or that of the heating plant, the heat plant is capable of directly providing water to such uses in a traditional way, namely through the integration of the hot water from the solar panels.

The association of the geothermal heat pump according to the invention with the solar panels, allows to exploit these latter for the flats heating, especially when the solar plant has a limited dimensioning and it is not able to exceed such temperature values to heat with a traditional direct heat exchange system. This is the most common case in which the solar plant has a power rating of 10-20% with respect to that of the heat production system. At this regard, it is to be reminded how the capability of a solar panel to provide energy increases with the decrease of the temperature of the fluid to be heated.

In the given example, the duct 20b which returns water from the solar panels flow in a three-way valve 15c, from which two first pipes are extending, a first pipe 21 a connected with the duct 17a which sends water to the geothermal probes SG, and a second pipe 21 b which flows in a fourth three-way valve 15d interposed in the outlet duct 13a"' coming from the desuperheater SC2 and directed to the exchanger for the production of sanitary hot water (and/or to other "hot" uses).

From the duct 17a which sends water to the geothermal probes SG a third pipe 22a, directed to the duct 20a which sends water to the solar panels, is extending. Analogously, from the inlet duct 13b"' at the desuperheater SC2, a fourth pipe 22b is extending, also directed to the duct 20a which sends water to the solar panels.

Valve means 15 include two unidirectional valves 15e and 15f, arranged on the third and fourth pipes 22a and 22b. Valve means 15 further include an additional valve 15g arranged on the duct 17a which sends water to the geothermal probes SG between the connection with the first pipe 21 a and third pipe 22a.

A fifth three-way valve 15h is arranged downstream of the connection with the first pipe 21 a, on the duct 17a which sends water to the geothermal probes SG. From such fifth three-way valve 15h a connection part 24 to the duct 17b which returns water from the geothermal probes SG is extending.

Operation means 19 include, in case of association with solar panels, a double differential thermostat Td arranged, for example, downstream the second three-way valve 15a" in the duct 17a which sends water to the geothermal probes SG, upstream the fitting with the third pipe 22a.

In practice, the thermostat Td, if the temperature of the solar panels is higher than the temperature required for the production of sanitary water (or other hot use connected with the desuperheater SC2) or the temperature of the feed water to the geothermal probes SG, sends a signal which allows to operate the third and fourth three-way valves 15c and 15d, to carry out the integration with the solar panels.

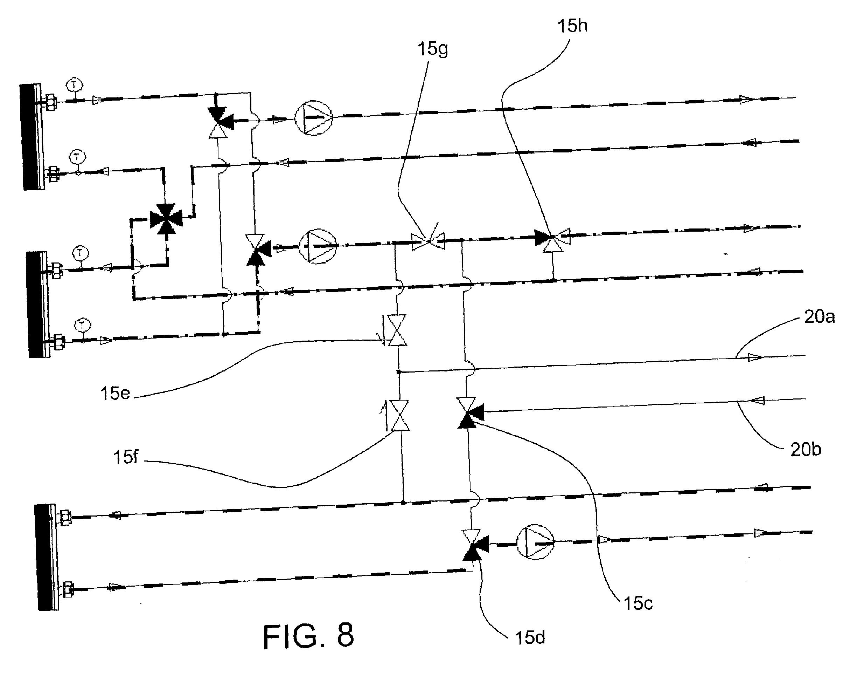

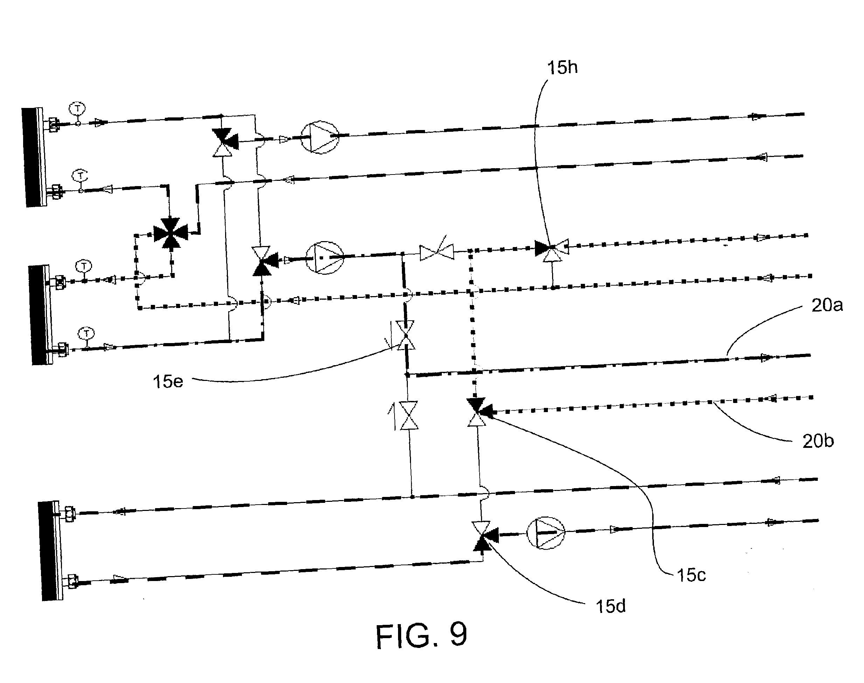

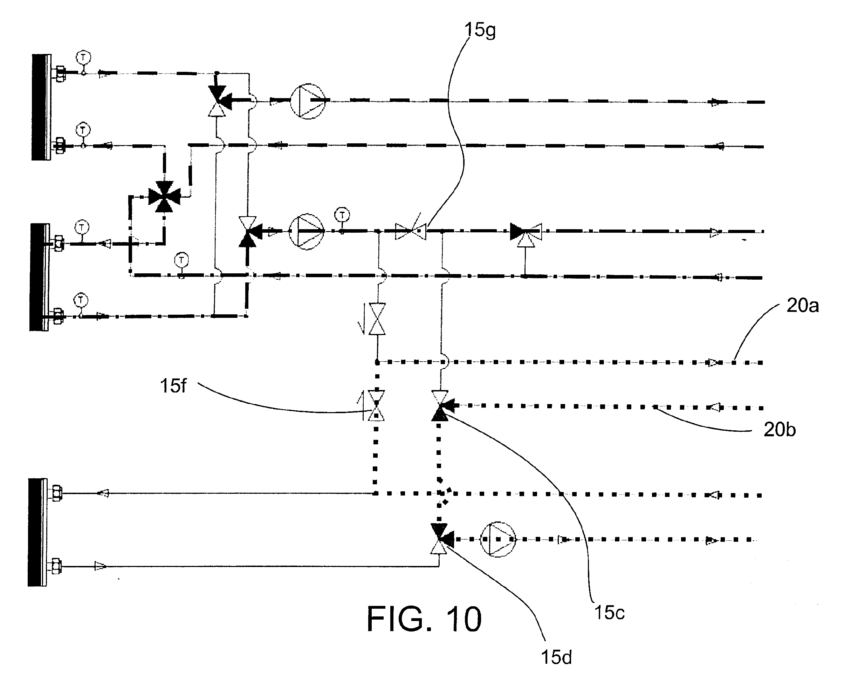

The following cases can occur:
a) a case in which the solar panels have a temperature lower than each of the sources which can be served (uses or geothermal probes). This event is, in practice, the night-time winter situation, in which the solar panels have a temperature lower than 0-3°C, therefore also useless for heating the water (also the same being between 0 and about 3°C) of the geothermal probes. The third and fourth valves 15c and 15d are arranged as in figure 8, by excluding the solar panels and leaving the plant under the conditions described in the preceding example, without a solar panel, namely the water from the desuperheater is sent to the uses and the cold water is sent to the geothermal probes coming from the evaporator (winter phase).
b) a case in which the solar panels have a higher temperature detectable at the geothermal probes, lower than the temperature required for the production of sanitary hot water. This is the case of the daytime winter situation, in which solar panels have a temperature between 15°-25°C, therefore optimal for integrating the water directed to the geothermal probes, thus increasing the throughput of the heat pump, as above indicated. The third and fourth valves 15c and 15d are arranged as in figure 9, by connecting the duct 20b which returns water from the solar panels with the duct 17a which sends water to the geothermal probes, and leaving that the water coming from the desuperheater SC2 is directed to the uses (boiler or the like).
c) a case in which the solar panels have a temperature higher than the water coming from the desuperheater C2 directed to the exchanger for the production of HWS (or other use). It is the daytime winter condition with a poor heating request by the user and the summer condition, in which the solar panels have a temperature higher than 40°C, then capable of directly supplementing the boiler without the aid (therefore the activation) of the compressor 11. The third and fourth valves 15c and 15d are arranged as in figure 10, by connecting the ducts 20a and 20b which send and return the water to and from the solar panels, with the ducts 13a"' and 13b"' directed to the exchanger for the production of sanitary hot water (and/or other hot uses).

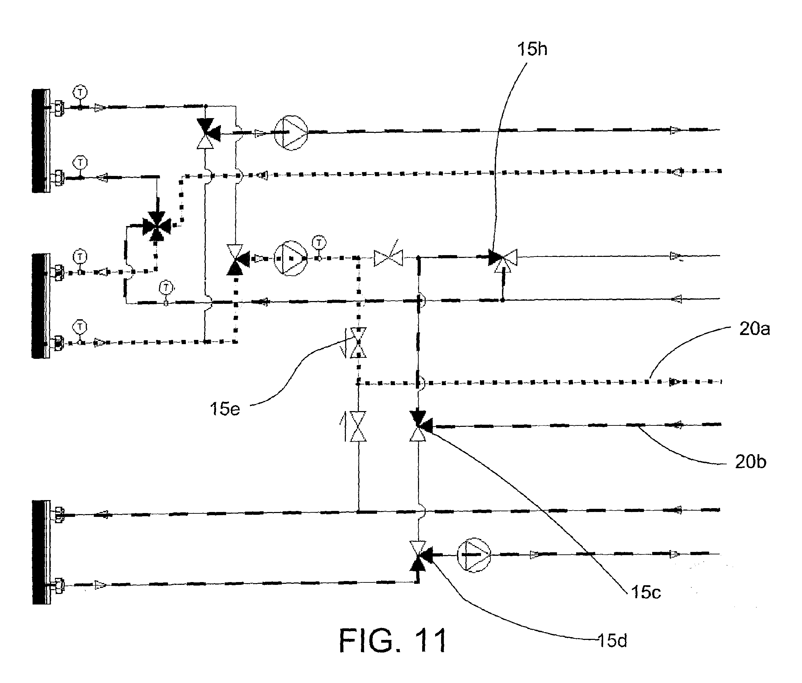

There is an additional thermostat Tev on the duct 17a returning from the geothermal probes, upstream the 4-way valve 15b; such thermostat is associated with the fifth three-way valve 15h. If the temperature detected by Tev reaches too high values (for example in case of coupling of the geothermal pump with very powerful solar panels, with a power rating similar to the power rating of the heat pump itself), the fifth three-way valve 15h is closed, and the hydraulic plant is short-circuited as shown in figure 11, preventing the compressor 11 from being switched on in a substantially analogous way to what observed in figure 6, with the solar panels connected with the uses, through evaporator and condenser, in practice by providing the heat of the solar panels without switching on the compressor.

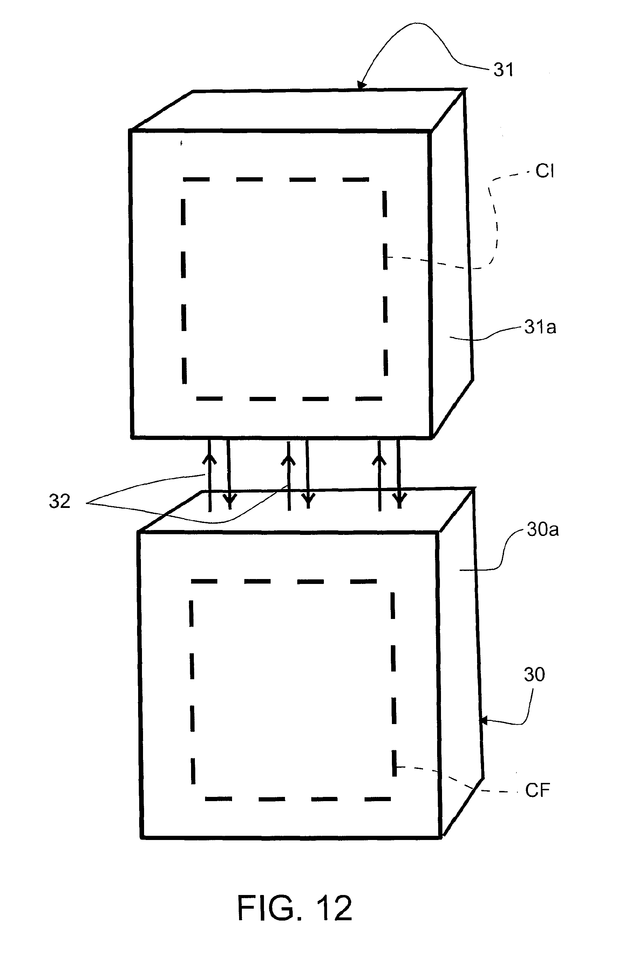

Advantageously, the geothermal heat pump according to the invention is structured in two distinct modules (see figure 12), a first modulus 30 including the refrigerating circuit CF with the exchangers formed by condenser, desuperheater and evaporator, and a second modulus 31 including the hydraulic circuit Cl. Each modulus 30 and 31 consists of an outer casing 30a and 31 a within which the components of the refrigerating CF and hydraulic Cl circuits are arranged. The two modules 30 and 31 are connected through flexible pipes 32 exiting the casings 30a and 31 a, which connect the outlet of the exchangers with the respective ducts 13a, 13b, 13a"', 13b"', 14a and 14b. On the same casings 30a and 31a, there are the junctions (not shown in the figure) to the outer plants, that is the uses, the geothermal probes, the solar panels, etc.

At the flexible pipes 32, hydraulic junctions are connected, which allow to disengage the two modules. This structure allows to arrange the two modules according to the more convenient modes in terms of encumbrance. Furthermore, it allows, in case of failure of one of the two modules, to disengage it from the other and move it, if necessary, in order to better carry out the repair or the maintenance.

It is to be noted that the execution of the cycle inversion not on the gas but on the water allows the refrigerating circuit from not being equipped with an inversion valve. This involves an increase of the reliability of the refrigerating circuit. Vice versa, the execution of the inversion on the water side involves a reduction of the reliability of such part of the heat pump. In this way, the reliability of the whole heat pump is maintained almost equal, if not improved (due to the known greater reliability of the components installable on the hydraulic systems compared to those installable on gas refrigerating systems), by displacing the likelihood of a failure on the hydraulic side.

With the geothermal heat pump according to the invention, it is possible to direct the needed quantity of "heating" or "cooling" to the uses, also simultaneously, independently of the season, and remove the excessive heat or cold through the geothermal exchange means, namely the geothermal probes inserted within the ground.

It is to be noted that, with the invention, a geothermal heat pump is carried out, whose operation logic allows to automatically remove the excessive quantities of heat (warm or cold) and only in the extent resulting from the heat balances between the different uses.

Again, the overdimensioning of the desuperheater associated with the short-circuit between condenser and evaporator allows to maintain operative the compressor of the heat pump also in the final step of the production of sanitary hot water, when there is no request of heating or cooling by the uses and the difference between primary fluid and water accumulated in the boiler reduces the yield of the exchanger below the need of heat exchange of the refrigerating circuit. Through this short-circuit, in fact, it is possible to remove the condensation heat of the refrigerating cycle by transferring it almost completely to the evaporator. Therefore, the production of HWS may proceed thanks to the heat produced by the compressor itself for its operation (Joule effect).

The geothermal heat pump thus devised is susceptible of several modifications and variants, all falling within the ambit of the same inventive concept; furthermore, all details can be replaced by other technically equivalent elements, without for this reason leaving the protective ambit of the invention itself.

In practice, the used materials, as long as they are compatible with the specific use, as well as the dimensions, could be any one, according to the requirements and the state of the art.

In case the features and the techniques mentioned in any claims are followed by reference signs, these have been enclosed, by way of example, for the only purpose of increasing the intelligibility of the claims and, accordingly, they have no limiting effects on the interpretation of each element identified by the same.

## Claims

1. A geothermal heat pump including a gas refrigerating circuit (CF) associated with a hydraulic circuit (CI) connected with the water sides of the heat exchangers (SC, SE) of said refrigerating circuit (CF) and connected with the hydraulic plant of the uses (U) and with geothermal exchange means (SG), **characterized in that**
- said gas refrigerating circuit is unidirectional and includes, in sequence: a compressor (11), a condenser (SC) suitable for warming up the water in said hydraulic circuit (Cl), a lamination element (12) and an evaporator (SE) suitable for cooling the water in said hydraulic circuit (Cl),
- said hydraulic circuit (Cl) includes: first ducts (13) connected at the inlet and the outlet of the water side of said condenser (SC); second ducts (14) connected at the inlet and the outlet of the water side of said evaporator (SE); valve means (15) for interconnection of said first and second ducts (13, 14) with third and fourth ducts (16, 17) for connection with the inlets and the outlets of the hydraulic uses (U) and with the geothermal exchange means (SG); thermostats (Tc, Te) associated with said first and second ducts (13, 14) suitable for measuring the temperature of the water entering the condenser (SC) and exiting from the evaporator (SE); operation means (19) for operating said valve means (15) in cooperation with said thermostats (Tc, Te), said operation means (19) being suitable for connecting the water side of the condenser (SC) with the hydraulic uses (UC) if they have to be heated and/or with said geothermal exchange means (SG) for the removal of the excessive heat, and for connecting the water side of the evaporator (SE) with the hydraulic uses (UF) if they have to be cooled and/or with said geothermal exchange means (SG) for removing the excess of cold, said operation means (19) cooperating with said valve means (15) for operating the hot/cold water flows by simultaneously automatically directing them to the requiring hot/cold uses (U), conveying the residual hot/cold water flow to the removal at the geothermal exchange means (SG) for allowing the heat balance of the exchanged heat.

2. A geothermal heat pump according to the claim 1, **characterized in that** said operation means (19) are suitable for
a. evaluating the inlet and outlet temperature at said condenser (SC),
b. evaluating the inlet and outlet temperature at said evaporator (SE),
c. simultaneously connecting
- the condenser (SC) with at least a hot use (UC), if requesting hot water,
- the evaporator (SE) with at least a cold use (UF), if requesting cold water,
- said same condenser (SC) or said same evaporator (SE) with said geothermal exchange means (SG) for removing the excessive heat or cold relative to the requests of the hot/cold uses (UF, UC).

3. A geothermal heat pump according to claim 2, **characterized in that** it includes a selector which allows to set at least two distinct working configurations defined "winter operation" and "summer operation", in said operation means (19) the following operation logics being implemented:
- with said selector set on the winter operation and with a said first thermostat (Tc1), measuring the temperature of the hot water entering the condenser (SC1) adjusted on a pre-ordered value Tc1=x°C, with a thermal hysteresis Dt=y°C, when Tc1 (measured) < x°C, operation means (19) permit the starting of the compressor (11), when x°C ≤ Tc1 (measured) ≤ x+y°C operation means (19) switch off the compressor (11), when Tc1 (measured) > x+y°C with the compressor (11) switched on due to a request by a use, operation means (19) act on the valve means (15) by conveying the hot fluid to the geothermal exchange means (SG) for carrying out the removal of the excessive heat;
- with said selector set on the summer operation and with a said second thermostat (Te2), measuring the temperature of the cold water entering at the water side of the evaporator (SE) set on a pre-ordered value Te2=z°C, with a thermal hysteresis Dt=y°C, when Te2 (measured) > z°C, the operation means (19) allow the starting of the compressor (11), when z-y°C ≤ Te2 (measured) ≤ z°C, operation means (19) switch off the compressor (11), when Te2 (measured) < z-y°C with the compressor (11) switched on due to a request by a use, operation means (19) act on the valve means (15) by conveying the cold fluid to the geothermal exchange means (SG) for carrying out the removal of the excessive cold;
- with a said third thermostat (Tc2) measuring the temperature of the hot water exiting from the condenser (SC1) set at a predefined value h ≥ x+y°C, said operation means (19) directing, for protecting the heat pump, a switching off signal to the compressor (11), independently of the position of said selector of the winter/summer operation;
- with a said fourth thermostat (Te1) measuring the temperature of the cold water exiting from the evaporator condenser (SE) set at a predefined value j ≤ z-y°C, said operation means (19) directing, for protecting the heat pump, a switching off signal to the compressor (11), independently of the position of said selector of the winter/summer operation.

4. A geothermal heat pump according to one or more of the preceding claims, **characterized in that** said exchanger condenser (SC) includes, in series between them, a desuperheater modulus (SC2) connected with the ducts (13a"', 13b"') directed and coming from the production plant of sanitary hot water, and a condenser modulus (SC1) associated with other uses (U) and/or geothermal exchange means (SG), said desuperheater (SC2) being dimensioned with a heat exchange capacity equal to the condenser modulus (SC1), said desuperheater modulus (SC2) and said condenser modulus (SC1) being dimensioned so as to be each capable of exchanging the total generated/requested heat, said operation means (19) being suitable for short-circuiting said uses with said geothermal exchange means (SG) through said condenser (SC1) and said evaporator (SE) if there is a request of hot water for said desuperheater modulus (SC2) and there is an insufficient temperature difference between water to be heated at the uses and water (primary fluid) circulating through the desuperheater (SC2) for transferring the condensation heat.

5. A geothermal heat pump according to one or more of the preceding claims, **characterized in that** said hydraulic circuit (Cl) includes first ducts (13) connected at the inlet and the outlet of the water side of the condenser (SC1), through said valve means (15), the first outlet part (13a) of the water side of the condenser (SC1) is connected with the duct (16a) which supplies water to the uses (UC, UF) or with the duct (17a) which sends water to the geothermal exchange means (SG), said first outlet part (13a) dividing itself in a first outlet branch at the use side (13a') and a first outlet branch at the removal side (13a"), respectively ending in a three-way valve at the use side (15a') and in a three-way valve at the removal side (15a"), the duct (16a) which sends water to the uses extending from said three-way valve at the use side (15a'), the duct (17a) which sends water to said geothermal exchange means (SG) extending from said three-way valve at the removal side (15a"); through said valve means (15), the inlet part (13b) at the water side of the condenser (SC1) is connected with the duct (16b) returning water from the uses (UF, UC) or with the duct (17b) returning water from the geothermal exchange means (SG), said duct (16b) returning water from the uses and said duct (17b) returning water from the geothermal exchange means (SG) flowing into a four-way valve (15b), from which said first inlet part (13b) at the water side of the condenser SC1 1 is exiting; said hydraulic circuit (Cl) further including second ducts (14) connected at the inlet and the outlet of the water side of the evaporator (SE), through said valve means (15), the outlet part (14a) of the water side of the evaporator (SE) is connected with the duct (16a) which supplies water to the uses, or with the duct (17a) which supplies water to the geothermal exchange means, said second outlet part (14a) being divided in a second outlet branch at the uses side (14a') and a second outlet branch of the removal side (14a"), respectively ending in said three-way valve at the uses side (15a') and in said three-way valve at the removal side (15a"); through said valve means (15), the second inlet part (14b) at the water side of the evaporator (SE) is connected with the duct (16b) returning water from the uses or the duct (17b) returning water from the geothermal exchange means, as it is connected to said four-way valve (15b); the water side of said desuperheater (SC2) presenting an outlet duct (13a"') and an inlet duct (13b"') directly connected with the "hot" use corresponding with the production of sanitary hot water.

6. A geothermal heat pump according to one or more of the preceding claims, **characterized in that** said operation means (19) are suitable for short-circuiting said uses with said geothermal exchange means (SG), through said condenser (SC) and said evaporator (SE).

7. A geothermal heat pump according to one or more of the preceding claims, **characterized in that** said short-circuit is such that said operation means (19) are suitable for controlling said valve means (15) so as to connect the duct (17b) which returns water from the geothermal probes with the first inlet part (13b) at the water side of the condenser (SC1), and to connect the duct (16b) which returns water from the uses with the second inlet part (14b) at the water side of the evaporator (SE); in said configuration, the first outlet part (13a) at the water side of the condenser (SC1) is connected with the duct (16b) which sends water to the uses, whereas the second outlet part (14a) at the water side of the evaporator (SE) is connected with the duct (17a) which sends water to the geothermal probes.

8. A geothermal heat pump according to one or more of the preceding claims, **characterized in that** said operation means (19), with said compressor (11) being inoperative, are suitable for controlling said valve means (15) so as to connect the duct (17b) which returns water from the geothermal probes with the first inlet part (13b) at the water side of the condenser (SC1), and to connect the duct (16b) which returns water from the uses with the second inlet part (14b) at the water side of the evaporator (SE); in said configuration, the first outlet part (13a) at the water side of the condenser (SC1) is connected with the duct (16b) which sends water to the uses, whereas the second outlet part (14a) at the water side of the evaporator (SE) is connected with the duct (17a) which sends water to the geothermal probes.

9. A geothermal heat pump according to one or more of the preceding claims, **characterized in that** it is structured in two separate modules, a first modulus (30) including the refrigerating circuit (CF) with the heat exchangers formed by the condenser (SC1), the desuperheater (SC2) and the evaporator (SE), and a second modulus (31) including the hydraulic circuit (Cl), said first and second modules (30, 31) comprising a respective outer casing (30a, 31 a) within which the components of the refrigerating (CF) and hydraulic (Cl) circuits are arranged, said two modules (30, 31) being connected through flexible pipes (32) exiting from said casings (30a, 31a), which connect the outlet of said exchangers (SC1, SC2, SE) with the respective ducts (13a, 13b, 13a"', 13b"', 14a and 14b), on the same casings (30a, 31a), the junctions to the outer plants (U, SG, S) being present.

10. A geothermal heat pump according to one or more of the preceding claims, **characterized in that** it includes interface means with solar panels (S), said valve means (15) being suitable for allowing the connection, through proper pipes, of the duct (20b) which returns water from the solar panels both with the outlet duct (13a"') coming from the desuperheater (SC2) and directed to the production of sanitary hot water, and the duct (17a) which sends water to the geothermal exchange means (SG), the same valve means (15) being suitable for allowing the connection of the duct (20a) which sends water to the solar panels both with the inlet duct (13b"') to the desuperheater (SC2) coming from the production of sanitary hot water, and the duct (17a) which sends water to the geothermal exchange means (SG); said configuration allowing to send hot water from the solar panels to the geothermal probes, or to the heat exchange means for the production of the sanitary hot water or to other uses or again sending hot water from the hot sources of the heat pump to the solar panels.

11. A geothermal heat pump according to claim 10, **characterized in that** said duct (20b) which returns water from the solar panels flow in a third three-way valve (15c) from which two first pipes are extending, a first pipe (21 a) connected with the duct (17a) which sends water to the geothermal exchange means (SG), and a second pipe (21b) which flows in a fourth three-way valve (15d) interposed in the outlet duct (13a"') coming from the desuperheater (SC2) and directed to the heat exchange means for the production of sanitary hot water and/or to other "hot" uses, from said duct (17a) which sends water to the geothermal exchange means (SG) a third pipe (22a) is extending, directed to the duct (20a) which sends water to the solar panels, from the inlet duct (13b"') to the desuperheater (SC2) a fourth pipe (22b) is extending, also the same being directed to the duct (20a) which sends water to the solar panels, said valve means (15) including two monodirectional valves (15e, 15f) arranged on such third and fourth pipes (22a, 22b); the valve means (15) further including an additional valve (15g) arranged on the duct (17a) which sends water to the geothermal exchange means (SG) between the junctions with said first pipe (21 a) and third pipe (22a); a fifth three-way valve (15h) being interposed, downstream the junction with the first pipe (21 a), on the duct (17a) which sends water to the geothermal exchange means (SG), from said fifth three-way valve (15h) a connection part (24) to the duct (17b) which returns water from the geothermal exchange means (SG) being developed.

12. A geothermal heat pump substantially as described and shown with reference to the enclosed drawings.
